Europäisches Patentamt

European Patent Office

Office européen des brevets

(19)

(11) Publication number: 0 192 103
A1

# (12) EUROPEAN PATENT APPLICATION

(21) Application number: 86101275.5

(22) Date of filing: 31.01.86

(51) Int. Cl.⁴: **B 65 B 7/20**
**B 65 G 23/24**

(30) Priority: 14.02.85 IT 2079185 U

(43) Date of publication of application:
27.08.86 Bulletin 86/35

(84) Designated Contracting States:
AT BE CH DE FR GB LI LU NL SE

(71) Applicant: SIAT - Società Internazionale Applicazioni
Tecniche S.p.A.
Via G. Puecher, 22
I-22078 Turate (Como)(IT)

(72) Inventor: Lissoni, Adelio
Via Barlassina 2
I-21040 Vedano Olona (Varese)(IT)

(74) Representative: Faggioni, Giovanmaria, Dr. et al,
Fumero-Studio Consulenza Brevetti Widenmayerstrasse
4/I
D-8000 München 22(DE)

(54) Conveying unit with incorporated reduction gear, for taping packaging machines.

(57) Conveying unit for taping packaging machines, of the type comprising at least one endless belt (5) for conveyance by friction, sliding on two transmission rollers (2) mounted at the ends of an elongated boxlike support body (1), at least one of said rollers (2) being driven by an electric motor (M) fixed to said boxlike body (1). According to the invention, said driving motor (M) is mounted directly onto one of the walls (1a) of said boxlike body (1), and a reduction gearing (7,8,9,11,15,17) is housed inside said boxlike body (1).

Fig. 1

EP 0 192 103 A1

==oOo==

The present invention concerns a packaging machine, and more precisely a machine for applying an adhesive sealing tape on packaging boxes, so-called taping machine.

It is known that in machines of this type means are provided to convey the boxes along a roller table, in an intermediate position of which the boxes are sealed by applying adhesive tape. Such conveying means - which particularly concern the present invention - generally comprise at least one endless belt, sliding on two transmission rollers - at least one of which is motor-driven - and having a rough surface, apt to convey the boxes by friction.

Generally - as described, for instance, in the US-A-3894380 - the two transmission rollers are mounted at the ends of an elongated boxlike support body, having two lateral faces which are substantially tangent, on diametrically opposite sides, to the periphery of the two transmission rollers, so that the belt can slide resting on said faces on the rectilinear path between the two rollers. The motor-driven roller is operated by means of an electric motor having its own reduction gear, the output shaft of which is usually connected directly to the shaft of the motor-driven roller. For this purpose, the motor and reduction gear are mounted directly onto said boxlike support body.

This arrangement has a double drawback:
- on one hand, the motor and reduction gear unit is considerably bulky and this can cause problems in a relatively small machine, as the taping machine of the type mentioned above;
- on the other hand, said unit - which is quite heavy, as well as bulky, and which is mounted projecting from said elongated boxlike body - produces on the body torsional stresses which are by no means desirable.

The object of the present invention is to realize a conveying unit for taping machines of the abovementioned type, which eliminates the

- 1 -

aforecited drawbacks thanks to a very simple and compact structure which is also economic. This result is obtained mainly due to the fact that the driving motor is mounted directly on said elongated boxlike body and that a reduction gearing is housed inside said boxlike body.

Further characteristics and advantages of the device according to the present invention will anyhow be more evident from the following description of a preferred embodiment thereof, illustrated by way of example on the accompanying drawings, in which:

Fig. 1 is a diagrammatic longitudinal part section view of an elongated boxlike body supporting the transmission rollers and of the motor unit and respective reduction gearing; and

Fig. 2 is a diagrammatic cross section view.

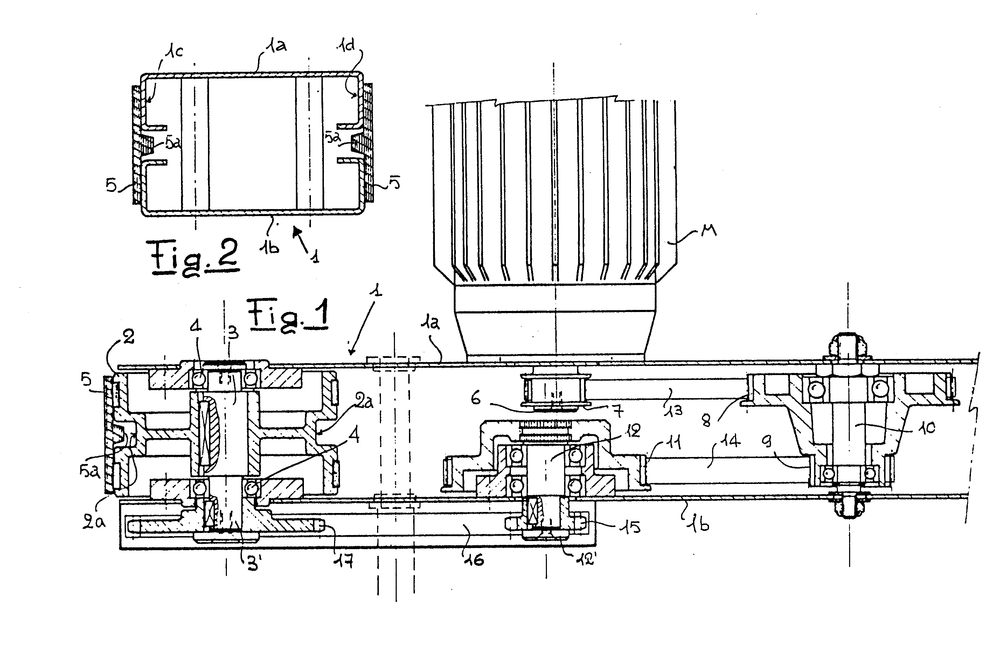

As shown, the conveying unit according to the present invention comprises an elongated boxlike body 1, of which only the upper wall 1a and the lower wall 1b are shown in figure 1. The two ends of said body 1 carry two transmission rollers 2, mounted by means of respective shafts 3 and rotating on bearings 4 fixed to the walls 1a and 1b; to simplify things, the drawing only shows one of said rollers 2, namely the motor-driven roller, the other roller being identical and mounted idle at the other end of the body 1.

An endless belt 5 is mounted on the rollers 2, said belt being preferably provided with a toothed rib 5a for engagement with a corresponding toothed groove 2a of the rollers 2. Between the two transmission rollers 2, the two lengths of the belt 5 run parallel, in contact with the side walls 1c and 1d of the elongated boxlike body 1.

According to the present invention, the driving motor M is mounted directly on the upper wall 1a of the body 1, by fastening means known per se and thus not shown, the driving shaft 6 of said motor shortly projecting within the body 1.

According to a preferred arrangement of the present invention, inside the body 1 there are mounted a first gear 7 splined to the shaft 6, a gear pair 8 and 9 rotating on a common shaft 10, and a further gear 11 splined to a shaft 12; the shaft 10 is fixed to the wall 1a, while the shaft 12 is mounted idle on the wall 1b of the body 1. Two preferably toothed drive belts 13 and 14 connect the gears 7, 8 and 9, 11 respectively.

The shaft 12 moreover projects from the wall 1b with an end 12' to which is splined the additional gearwheel 15, meshing with a chain 16 which drives the gearwheel 17, this latter being splined to the end 3' of the shaft 3 projecting from the same wall 1b.

As it appears evident, the described motion transmission allows to obtain a reduction of the motion transmitted by the motor M, in the ratio attained through the gears 7, 8, 9, 11, 15 and 17.

It can be easily understood that the heretofore described conveying unit structure provides obvious advantages:

- first of all, the fact that only the motor M is fixed on the outer part of the body 1 determines a reduction in the overall external dimensions and in the cantilevered or projecting weights;

- moreover, the weight of the gearbox unit is totally eliminated, as the gears of said unit are housed directly into the body 1;

- finally, also the position of the motor M is no longer constrained - as in the past - to one of the ends of the body 1 in correspondence of the shaft 3 of one of the transmission rollers, but it can be set at will along the length of said body 1, as the transmission inside the body 1 can be housed in any desired position, with obvious advantages in respect of the planning;

- last of all, although in the illustrated arrangement the transmission comprises a gear pair 15, 17, mounted externally to the body 1, nothing forbids to house said transmission completely inside the body 1, by providing for instance a gear apt to mesh directly with the toothed groove 2a of the roller 2.

CLAIMS

1) Conveying unit for taping packaging machines, of the type comprising at least one endless belt for conveyance by friction, sliding on two transmission rollers mounted at the ends of an elongated boxlike support body, at least one of said rollers being driven by an electric motor fixed to said boxlike body, characterized in that the driving motor (M) is mounted directly onto one of the walls (1a) of said boxlike body (1), and in that a reduction gearing (7, 8, 9, 11, 15, 17) is housed inside said boxlike body (1).

2) Conveying unit as in claim 1), wherein the end of the shaft (6) of the driving motor (M) projects within the boxlike body (1) and a first gear (7) is splined thereto, at least one further gear pair (8, 9) being mounted inside said body (1), rotating on a common shaft (10), and a fourth gear (11) splined to an idle shaft (12), said gears (7, 8 and respectively 9, 11) being mutually connected by drive belts (13, 14).

3) Conveying unit as in claim 2), wherein said drive belts (13, 14) are toothed belts.

4) Conveying unit as in claim 2), wherein the shaft (12) of the fourth gear (11) carries a gearwheel (15) driving a transmission chain (16) meshing with a second gearwheel (17) splined to the shaft (3) carrying one of the transmission rollers (2).

5) Conveying unit as in claim 2), wherein the shaft (12) of the fourth gear (11) drives a motion transmission meshing directly with a toothed groove (2a) formed on one of the rollers (2).

Fig.2

Fig.1

**0192103**

Application number

**EUROPEAN SEARCH REPORT**

EP 86 10 1275

## DOCUMENTS CONSIDERED TO BE RELEVANT

| Category | Citation of document with indication. where appropriate, of relevant passages | Relevant to claim | CLASSIFICATION OF THE APPLICATION (Int Cl.4) |
|---|---|---|---|
| Y | US-A-3 894 380 (POULSEN) <br> * Column 4, lines 9-13; figure 1 * | 1 | B 65 B 7/20 <br> B 65 G 23/24 |
| Y | US-A-3 623 293 (BOULAY) <br> * Column 8, line 55 - column 9, line 32; figures 2,3,5 * | 1 | |
| A | US-A-2 446 660 (MULKEY) <br> * Column 1, line 55 - column 3, line 9; figure 3 * | 2 | |

TECHNICAL FIELDS SEARCHED (Int. Cl.4)

B 65 B
B 65 G

The present search report has been drawn up for all claims

| Place of search <br> THE HAGUE | Date of completion of the search <br> 13-05-1986 | Examiner <br> CLAEYS H.C.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82